# EUROPÄISCHE PATENTANMELDUNG

(11) **EP 4 790 547 A1**
(43) Veröffentlichungstag der Anmeldung: **12.08.2026**
(21) Anmeldenummer: 25157188.1
(22) Anmeldetag: 11.02.2025
(51) Int. Cl.: G06F 8/34, G06F 8/36, G06F 8/30

(54) **VERFAHREN UND ANORDNUNG ZUR PROJEKTIERUNG EINER INDUSTRIELLEN AUTOMATISIERUNGSANORDNUNG**

(71) Anmelder: Siemens Aktiengesellschaft, 80333 München (DE)
(72) Erfinder: Coppini, Daniel, 91056 Erlangen (DE); Gauglitz, Daniel, 90571 Schwaig (DE); Roschlau, Jannis, 53115 Bonn (DE); Schaaf, Joachim, 50259 Pulheim (DE)
(74) Vertreter: Siemens Patent Attorneys

(57) **Zusammenfassung**

Die Erfindung betrifft ein Verfahren und eine Anordnung zur Projektierung einer industriellen Automatisierungsanordnung mittels eines industriellen Engineeringsystems, wobei für ein Automatisierungsprojekt aus einer Software-Bibliothek eine Anzahl von Programmbausteinen ausgewählt und dem Automatisierungsprojekt hinzugefügt und in diesem instantiiert werden, und wobei unter Verwendung der Programmbausteine ein Automatisierungsprogramm erstellt, kompiliert und zum Ablauf auf eine Automatisierungskomponente der Automatisierungsanordnung übertragen wird. Dabei werden zu jedem der Programmbausteine der Software-Bibliothek maschinenlesbare Informationen über die Aufrufeigenschaften und Verschaltung des jeweiligen Programmbausteins hinzugefügt, wobei durch das Engineeringsystem bei der Erstellung des Automatisierungsprogramms diese Informationen der ausgewählten Programmbausteine zur Benennung der Instanzen der Programmbausteine und zur Verschaltung der Schnittstellen der instanziierten Programmbausteine verwendet werden. Damit wird ein generisches Engineeringsystem bzw. ein davon verwendeter generischer Programmgenerator in die Lage versetzt, unterschiedliche Software-Bibliotheken auch unterschiedlicher Hersteller zu verwenden und die darin abgelegten Programmbausteine in ein Projekt zu integrieren. Kunden- oder projektspezifische Änderungen einer Generator-Komponente sind nicht notwendig, weil die spezifischen Informationen zur Verschaltung und Nutzung von Bibliotheks-Elementen diesen mittels einer zugeordneten Information in Gestalt einer Beschreibungsdatei jeweils beigestellt sind.

## Beschreibung

Die Erfindung betrifft ein Verfahren zur Projektierung einer industriellen Automatisierungsanordnung mittels eines industriellen Engineeringsystems gemäß dem Oberbegriff des Patentanspruchs 1, und eine Anordnung zur Projektierung einer industriellen Automatisierungsanordnung gemäß dem Oberbegriff des Patentanspruchs 6.

Die Erfindung betrifft insbesondere voll flexibles und effizientes Generieren von Automatisierungsprojekten (z.B. SPS-Programm in einem Engineeringsystem wie dem TIA Portal des Herstellers Siemens) basierend auf Standard-Elementen (Bausteine in einer Bibliothek, Vorlagen, MasterCopies, etc.). Diese Standard-Elemente sollen im Folgenden pauschal als Programmbausteine bezeichnet werden.

In der Industrie setzen viele Kunden auf Standardisierung. Hierzu besitzen sie Vorlagenprojekte, sog. Templates oder Bibliotheken von Bausteinen, die sie zum Aufbau ihrer Automatisierungsprojekte miteinander kombinieren - im Folgenden sollen zur Vereinfachung alle Quellen für Programmbausteine und andere wiederzuverwendende Elemente als "Software-Bibliothek" (kurz: Bibliothek) bezeichnet werden. Hierdurch können die Kunden projektspezifische Entwicklungsarbeit reduzieren und schnell und effizient eigene individuelle und qualitativ hochwertige Automatisierungsprojekte erstellen.

Die Verwendung standardisierter Elemente bietet auch die Möglichkeit, die Verschaltung und Kombination dieser nach definierten Regeln automatisiert von einem sogenannten Projektgenerator (kurz: Generator) erstellen zu lassen. Einige größere Kunden haben hierzu einen eigenen Projektgenerator entwickelt, welcher die Erstellung der Automatisierungsprojekte übernimmt und die Engineering-Effizienz nochmals erhöht. Im Folgenden soll zur Vereinfachung davon ausgegangen werden, dass die Projektgeneratoren entweder Bestandteil von Engineeringsystemen sind, oder aber mit solchen zusammenwirken.

Bisherige Projektgeneratoren sind jedoch speziell auf die jeweilige Bibliothek zugeschnitten bzw. entwickelt oder zumindest branchenspezifisch ausgestaltet und daher nicht oder nur mit sehr viel Aufwand auf andere Bausteine / Bibliotheken übertragbar oder auf neue Elemente erweiterbar. Das ist insbesondere auch bei der parallelen oder wechselweisen Verwendung unterschiedlicher Bibliotheken oder Quellen ungünstig.

Es ist daher eine Aufgabe der vorliegenden Erfindung, die Generierung oder Erweiterung von Projekten im Automatisierungsumfeld, also von Automatisierungsprojekten, flexibler und einfacher zu gestalten, insbesondere bei der Verwendung geänderter, neuer oder weiterer Software-Bibliotheken.

Die erfindungsgemäße Lösung dieser Aufgabe verwendet eine generatorzentrische Perspektive, sowie eine Entkopplung zwischen Generator und Bibliothek. Dazu soll für die Generierung, Änderung oder Erweiterung eines Projektes ein Generator mit definierten Fähigkeiten unabhängig einer zu generierenden Bibliothek verwendet werden, also ein generisch arbeitender Generator. Über eine speziell entwickelte Beschreibungssprache, die jedes zu generierende Element verwendet bzw. dieses beschreibt, fragt der Generator vor dem Generieren dessen Verschaltungsregeln ab.

Diese Beschreibungssprache ist eine eigens entwickelte Notation, welche sämtliche Informationen über das Element in einer maschinenlesbaren Sprache (insbesondere XML) dem Generator zur Verfügung stellt. Zu den Informationen zählen Funktion des Elements, Ebene in der Projekthierarchie, mögliche übergeordnete Elemente, notwendige Verschaltungen, Art des Aufrufs, Name der Instanz, Verschaltung mit Parametern, zur Dynamisierung verwendete Platzhalter, etc. Mithilfe dieser Beschreibungssprache wird der Projektgenerator befähigt, neue Elemente oder Bibliotheken volldynamisch zu verwenden, ohne dass dafür der Quellcode des Generators angepasst werden muss. Somit kann also einem Nutzer ein breit einsetzbarer Projektgenerator zur Verfügung gestellt werden, welcher in der Lage ist, mit jeglicher Kundenbibliothek zu arbeiten und darauf basierend Automatisierungsprojekte zu generieren.

Bisherige Projektgeneratoren beschränkten sich oftmals auf die Verwendung einer einzelnen (Kunden-)Bibliothek bzw. sind spezifisch für diese entwickelt worden ("hardcoded"). D.h. für jedes aufzurufende Element im Automatisierungsprojekt existiert ein zugehöriges Softwaremodul im Generator, welcher die Aufruf- und Verschaltungslogik des Elements automatisiert. Kommen neue Elemente hinzu, die ins Automatisierungsprojekt zu generieren sind, bedeutet dies immer, dass der Generator in seinem Quellcode anzupassen ist. Dasselbe gilt auch für Anpassungen existierender Elemente, also bei Änderungen an Programmbausteinen in den verwendeten Software-Bibliotheken.

Obwohl hier und im Folgenden mit "Programmbausteinen" in erster Linie Einheiten mit Software genannt sind, können die Programmbausteine auch Hardware-Einheiten repräsentieren, die in der Projektierung miteinander verschaltet werden (oft als "Hardware-Config" bezeichnet); als Resultat entsteht dann kein ausführbares Programm, sondern ein Plan mit Hardware-Bausteinen und deren verschalteten Hardware-Schnittstellen, der dann als Grundlage eines realen Aufbaus dient und der ein Grundgerüst für die nachfolgen Programmierung der Hardware-Bausteine dient. Somit können sowohl maschinenlesbare Informationen über die Verwendung und Verschaltung der Hardware, als auch der Software vorliegen, was dann eine zweistufige und umfängliche Generierung des Projektes mit geringer Benutzerinteraktion ermöglicht.

Hierdurch sind im Stand der Technik existierende Generatoren auf die jeweilige Anwendung / Bibliothek spezialisiert und nicht breit skalierbar oder für verschiedene Bibliotheken verwendbar. Durch das Entwickeln des Generators mit Fokus auf dessen grundlegende Fähigkeiten und der Verwendung einer generischen Beschreibungssprache ist dieser Generator bzw. ein derart ausgestaltetes Engineeringsystem in der Lage, jede beliebige Bibliothek einzulesen und darauf basierend Projekte zu generieren.

Die Aufgabe wird insbesondere mittels des Verfahrens gemäß Patentanspruch 1 und mittels der Anordnung nach Patentanspruch 6 gelöst.

Dabei wird ein Verfahren zur Projektierung einer industriellen Automatisierungsanordnung mittels eines industriellen Engineeringsystems vorgeschlagen, wobei für ein Automatisierungsprojekt aus einer Software-Bibliothek eine Anzahl von Programmbausteinen ausgewählt und dem Automatisierungsprojekt hinzugefügt und in diesem instanziiert werden, und wobei unter Verwendung der Programmbausteine ein Automatisierungsprogramm erstellt, (vor-)kompiliert und zum Ablauf auf eine Automatisierungskomponente der Automatisierungsanordnung übertragen wird. Dabei werden zu jedem der Programmbausteine der Software-Bibliothek maschinenlesbare Informationen über die Aufrufeigenschaften und Verschaltung des jeweiligen Programmbausteins hinzugefügt, wobei durch das Engineeringsystem bei der Erstellung des Automatisierungsprogramms diese Informationen der ausgewählten Programmbausteine zur Benennung der Instanzen der Programmbausteine und zur Verschaltung der Schnittstellen der instanziierten Programmbausteine verwendet werden. Damit wird ein generisches Engineeringsystem bzw. ein davon verwendeter generischer Programmgenerator in die Lage versetzt, unterschiedliche Software-Bibliotheken auch unterschiedlicher Hersteller zu verwenden und die darin abgelegten Programmbausteine in ein Projekt zu integrieren. Kunden- oder projektspezifische Änderungen einer Generator-Komponente sind nicht notwendig, weil die spezifischen Informationen zur Verschaltung und Nutzung von Bibliotheks-Elementen diesen mittels einer zugeordneten Information in Gestalt einer Beschreibungsdatei jeweils beigestellt sind.

Außerdem wird zur Lösung der Aufgabe eine Anordnung zur Projektierung einer industriellen Automatisierungsanordnung vorgeschlagen, mit einer Software-Bibliothek mit einer Anzahl von Programmbausteinen, und mit einem industriellen Engineeringsystem, das dazu eingerichtet ist, unter Verwendung der Programmbausteine ein Automatisierungsprogramm zu erstellen, kompilieren und zum Ablauf auf eine Automatisierungskomponente der Automatisierungsanordnung zu übertragen, wobei vorgesehen ist, dass für ein Automatisierungsprojekt aus der Software-Bibliothek eine Anzahl von Programmbausteinen ausgewählt und dem Automatisierungsprojekt hinzugefügt und in diesem instantiiert werden. Dabei sind zu jedem der Programmbausteine der Software-Bibliothek maschinenlesbare Informationen über die Aufrufeigenschaften und Verschaltung des jeweiligen Programmbausteins hinzugefügt, und das Engineeringsystem ist dazu eingerichtet, bei der Erstellung des Automatisierungsprogramms diese Informationen der ausgewählten Programmbausteine zur Benennung der Instanzen der Programmbausteine und zur Verschaltung der Schnittstellen der instantiierten Programmbausteine zu verwenden. Durch diese Anordnung können die bereits anhand des Verfahrens diskutierten Vorteile erzielt werden.

Vorteilhafte Ausgestaltungen des erfindungsgemäßen Verfahrens sind in den abhängigen Patentansprüchen angegeben. Die dabei offenbarten Merkmale und Vorteile können sowohl einzeln, als auch in sinnfälliger Kombination miteinander realisiert werden.

In einer vorteilhaften Ausgestaltung wird durch das Engineeringsystem eine künstliche Intelligenz, insbesondere ein Large Language Model (LLM, z.B. ChatGPT, Siemens Industrial CoPilot oder dgl.), zur Erstellung des Automatisierungsprogramms verwendet, wobei das Engineeringsystem mit der Software-Bibliothek zugeordneten Notationskonventionen für die Aufrufeigenschaften und Verschaltung von Programmbausteinen versehen oder, in einer anderen Variante, vortrainiert wird und wobei eine textuelle Beschreibung einer Projektkonfiguration mit einer Spezifikation zumindest eines Programmbausteins unter Verwendung der Informationen über die Aufrufeigenschaften und Verschaltung des jeweiligen Programmbausteins durch das Engineeringsystem verarbeitet wird. Bei der Verschaltung der Schnittstellen des Programmbausteins werden anhand der Informationen passende Variablen, Tags oder Datenstrukturen anderer Programmbausteine oder eines Prozessabbildes oder einer globalen Datenstruktur oder ein Kommunikationskanal aufgefunden und mit entsprechenden Schnittstellen des Programmbausteins verknüpft. Damit lassen sich als Alternative oder zur Ergänzung einer Ul-geführten (UI = User-Interface, also einer geführten graphischen Benutzeroberfläche) Erstellung einer Projektkonfiguration Projekte weitgehend automatisiert generieren bzw. weitgehend automatisch Programmcode für industrielle Steuerungen erstellen.

Grundsätzlich kann die "Bibliotheksnotation" angepasst werden, um das Generierverhalten zu beeinflussen. In einer erweiterten Ausgestaltung werden dazu durch das Engineeringsystem die Notationskonventionen aus der Software-Bibliothek oder aus einem externen Datenserver eingelesen. Somit kann das Engineeringsystem bzw. der darin integrierte Projektgenerator auf die Syntax der Informationen über die Programmbausteine angepasst werden, insbesondere durch ein sog. Syntax-Plug-In oder eine Beschreibungsdatei - die dabei bereitgestellten Definitionen sind vorteilhaft in derselben oder einer ähnlichen maschinenlesbaren Form wie die Informationen über die Programmelemente formuliert, beispielsweise XML, JSON oder dergleichen, was einem Nutzer die Erstellung und Bearbeitung erleichtert. Somit können Variationen der Notationskonventionen verschiedener Hersteller von Programmbibliotheken, branchenspezifische Erweiterungen oder Weiterentwicklungen berücksichtigt werden. In einer Ausgestaltung ist das Engineeringsystem bereits mit einer Basisvariante der Notationskonventionen vorprogrammiert und wird erst im Bedarfsfall angepasst, was auch automatisch durch Bezug erweiterter oder neuer Notationskonventionen von einem Server des Herstellers der jeweiligen Programmbibliothek geschehen kann.

Für die Speicherung und Zuordnung der Informationen zu den Programmbausteinen können verschiedene Strategien verfolgt werden, wobei in einer besonders vorteilhaften Ausgestaltung die maschinenlesbaren Informationen in einer Datei, insbesondere einer XML- oder JSON-Datei, gespeichert sind, wobei die XML- oder JSON-Datei in der Software-Bibliothek mit dem entsprechenden Programmbaustein jeweils verlinkt oder gebündelt ist. Solche Dateien sind leicht zu verarbeiten und können auch leicht von einem menschlichen Benutzer erstellt und verändert werden. Außerdem können damit Kommentare und Anmerkungen zum jeweiligen Programmbaustein oder Element gespeichert, transportiert und automatisch in das Projekt übernommen werden.

Ein Ausführungsbeispiel des erfindungsgemäßen Verfahrens bzw. der erfindungsgemäßen Vorrichtung wird nachfolgend anhand der Zeichnungen erläutert.

Dabei zeigen:
- Figur 1: ein Beispiel, in dem aus einem Bibliothekselement und einer XML-Datei mit Informationen über das Bibliothekselement ein verschaltetes Programmelement in einer Projektierung erzeugt wird,
- Figur 2: ein Beispiel für eine Generierung eines Projektes aus einer Spezifikationsdatei, und
- Figur 3: ein Beispiel der XML-basierten Beschreibungssprache zur Beschreibung eines Aufrufs eines Programmbausteins.

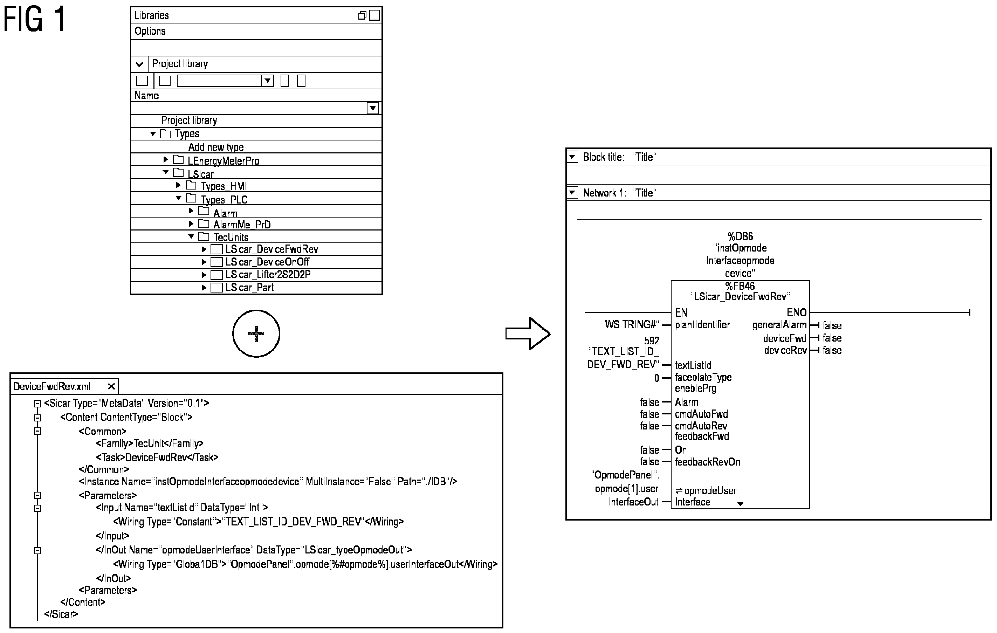

Die Figur 1 zeigt in dem Block links oben die Ansicht einer Software-Bibliothek mit verschiedenen Programmbausteinen. Im vorliegenden Beispiel soll aus einer Technologiebibliothek (TecUnit) mit dem Namen LSicar der Programmbaustein "DeviceFwdRev" ausgewählt und in einem Automatisierungsprojekt und damit später in einem Automatisierungsprogramm verwendet werden.

Diesem Programmbaustein ist eine XML-Beschreibungsdatei mit Informationen über die Aufrufeigenschaften und Veranstaltung hinzugefügt, die in der Figur 1 links unten dargestellt ist. Im vorliegenden Beispiel wird diese mit dem Programmbaustein in der Software-Bibliothek verknüpfte oder ggf. anderweitig vorliegende XML-Datei mit Auswahl des Programmbausteins automatisch in das Engineering System mit dem Projektgenerator übernommen und dort verarbeitet.

In der Figur 1 ist auf der rechten Seite einen Ausschnitt des Automatisierungsprojekts mit dem generierten Programmbaustein dargestellt, wie er sich nach Hinzufügung des Projektes, beispielsweise mittels einer Drag-n-drop-Operation, darstellt. Der Baustein weist dabei Verschaltungen gemäß den in der XML-Datei beschriebenen Aufrufregeln auf. Dabei ist zu sehen, dass gemäß dem Eintrag
"Wiring Type="GlobalDB">OpmodePanel".opmode[%#opmode%].userInterfaceOut"</Wiring>

in dem Block mit den kombinierten Ein- und Ausgängen "InOut" (siehe Beschreibungsdatei links unten in Figur 1) die entsprechende Variable "opmodeUserInterface" des Programmbausteins automatisch mit dem passenden globalen Tag (Identifier) einer globalen Datenstruktur (z.B. Prozessabbild oder globale Tags/Identifier/Variablen anderer Programmbausteine oder Kommunikationskanäle) verschaltet worden ist (siehe den verschalteten Port links unten im Block "Network 1" der Projektdatei auf der rechten Seite der Figur 1).

Der Programmbaustein wird also individuell parametriert, und zwar diesem Beispiel vollautomatisch. Das Platzieren der Bausteine und deren Beschaltung passiert bei dem beschriebenen Projektgenerator in einem Schritt; eine Entkopplung der beiden Vorgänge ist aber auch, wie nachfolgend beschrieben, möglich und in manchen Fällen zur besseren Kontrolle durch einen Nutzer vorteilhaft. Statt Programmierung im klassischen Sinne werden also hier Bausteine zusammengestellt, beispielsweise mittels Drag-n-drop, und ein Projektgenerator des Engineeringssystems erstellt dann die Instanz des Bausteins und verschaltet automatisch die Schnittstellen. Zu jedem realen Objekt in einer Fabrik gibt es idealerweise einen Programmbaustein in einer Software-Bibliothek und dazu für den Projektgenerator Informationen, wie der jeweilige Programmbaustein zu benennen und zu verschalten ist. Diese Informationen sind dabei nicht, wie im Stand der Technik, unveränderlicher Bestandteil des jeweiligen Projektgenerators, sondern sie sind dem jeweiligen Programmbaustein zugeordnet und damit individuell für diesen Programmbaustein. Mit anderen Worten: der Projektgenerator braucht nicht später angepasst werden, wenn es neue Programmbausteine gibt.

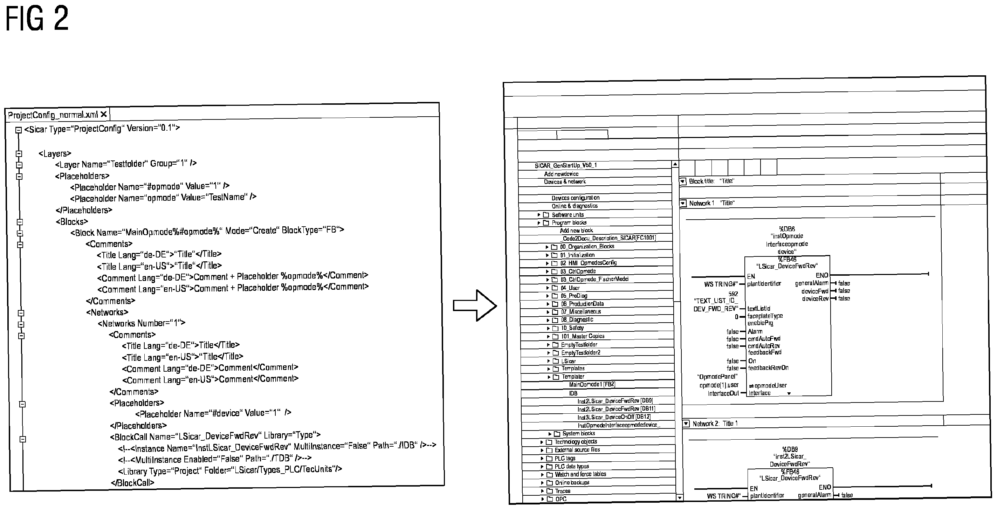

Die Figur 2 zeigt das Beispiel einer Erzeugung eines Automatisierungsprojektes anhand einer Spezifikationsdatei. Dabei ist auf der linken Seite der Figur 2 eine XML-Datei mit der Projektkonfiguration gezeigt, wo beispielsweise in der fünftletzten Zeile der Aufruf des schon anhand der Figur 1 diskutierten Programmbausteins zu finden ist:
Blockcall Name=LSicar_DeviceFwdRev" ...

Auf der rechten Seite der Figur 2 ist dann das Resultat zu sehen. Der entsprechende Programmbaustein ist also in dem Projekt instantiiert und anhand der dem Programmbaustein zugeordneten Informationen, die in der Figur 1 in dem Block links unten zu sehen sind, entsprechend verschaltet worden.

Der "Workflow" gemäß dem erfindungsgemäßen Verfahren sieht also vor, dass einem Automatisierungsprojekt zunächst eine Programmbibliothek oder ein Beispielprojekt (Template Project), optional mit einer Konfiguration, hinzugefügt wird. Dann wird eine Projekt-Konfiguration hinzugefügt, die die Struktur des Projektes vorgibt. Danach wird teil- oder vollautomatisch das Projekt generiert, basierend auf den zuvor zur Verfügung gestellten Informationen. Dabei erfolgt nicht nur einen Namens-Anpassung der Programmelemente, sondern es werden eine funktionale Beschreibung und Abhängigkeiten ausgewertet und auf das Projekt angewendet.

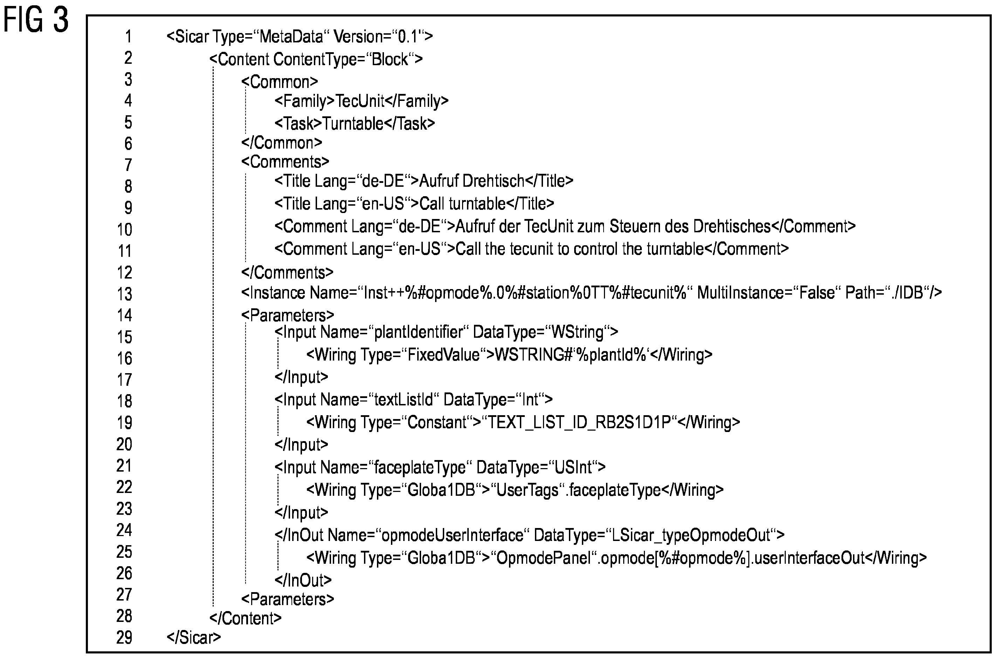

In der Figur 3 ist das Beispiel einer XML-basierten Beschreibung zum Aufruf eines Programmbausteins "Turntable" für einen industriellen Drehtisch gezeigt. Die darin verzeichneten Kommentare werden dabei automatisch in das Projekt übernommen und erleichtern es einem Projektingenieur, das Projekt später manuell zu ändern oder zu bearbeiten.

In der Datei ist beispielsweise zu sehen, dass eine Struktur für eine Bezeichnung (Name) des später instantiierten Programmelementes vorgegeben ist, nämlich in der Zeile "Instance Name", die entsprechende Platzhalter aufweist. Für die Eingänge (Inputs) des Programmbausteins sind nicht nur die Namen und die Datentypen der jeweiligen internen Variable aufgezählt, sondern auch Vorschriften über die Verschaltung mit globalen Variablen des Projektes oder anderen Programmbausteinen, insbesondere in den Zeilen mit dem Syntaxelement "Wiring Type".

Erfindungsgemäß erfolgt also ein Entkoppeln zwischen dem Projektgenerator (und damit dem Engineeringsystem) und dessen Fähigkeiten und der Software-Bibliothek via einer maschinenlesbaren Beschreibungssprache. Der Generator liest aus der Bibliothek dynamisch vor dem Generiervorgang die Aufruf- und Verschaltungseigenschaften jedes Bausteins aus und interpretiert diese. Hierdurch ist ein Projekt- oder Programmgenerator eines Herstellers für ein breites Anwendungsspektrum und damit für viele unterschiedliche Kunden verwendbar und ggf. auch anpassbar oder erweiterbar. Neue Programmbausteine oder neue Programmbibliotheken können mit bestehenden Engineeringsystemen teil- oder vollautomatisch verarbeitet werden, weil die notwendigen Informationen zur Handhabung und Verschaltung der neuen Programmbausteine mit diesen mitgeliefert werden und automatisch berücksichtigt werden können.

Insbesondere ist somit eine Verwendung der Software-Bibliotheken durch Kl-basierte Assistenten (sog. "Co-Pilots" oder GPTs oder LLMs) vereinfacht möglich, weil die Kl-Modelle nicht mehr spezifisch auf bestimmte Programm-Bibliotheken vortrainiert werden müssen. Zudem können Projektstrukturen in maschinenlesbaren Beschreibungsdateien (meist in XML-Notation) auch durch die genannten LLM-Sprachmodelle verarbeitet werden, weil die maschinenlesbar beigefügten Informationen über die Programmelemente eine automatische Generierung des Projektes erst vollumfänglich ermöglichen.

Sofern die Notation der Beschreibungssprache dem Projektgenerator fremd ist, wird diese vor dem Generiervorgang ausgelesen (aus der Software-Bibliothek oder aus zugehörigen Beschreibungsdateien). Somit kann mit dem Anwender gemeinsam basierend auf der ausgelesenen Bibliotheksarchitektur das jeweilige Projekt und dessen Projektarchitektur beschrieben werden und eine anschließende Generierung des derart definierten Projektes erfolgen.

## Patentansprüche

1. Verfahren zur Projektierung einer industriellen Automatisierungsanordnung mittels eines industriellen Engineeringsystems,
wobei für ein Automatisierungsprojekt aus einer Software-Bibliothek eine Anzahl von Programmbausteinen ausgewählt und dem Automatisierungsprojekt hinzugefügt und in diesem instantiiert werden, und
wobei unter Verwendung der Programmbausteine ein Automatisierungsprogramm erstellt, kompiliert und zum Ablauf auf eine Automatisierungskomponente der Automatisierungsanordnung übertragen wird,
**dadurch gekennzeichnet,**
**dass** zu jedem der Programmbausteine der Software-Bibliothek maschinenlesbare Informationen über die Aufrufeigenschaften und Verschaltung des jeweiligen Programmbausteins hinzugefügt werden, und
**dass** durch das Engineeringsystem bei der Erstellung des Automatisierungsprogramms diese Informationen der ausgewählten Programmbausteine zur Benennung der Instanzen der Programmbausteine und zur Verschaltung der Schnittstellen der instantiierten Programmbausteine verwendet werden.

2. Verfahren nach Patentanspruch 1,
**dadurch gekennzeichnet,**
**dass** das Engineeringsystem eine künstliche Intelligenz, insbesondere ein Large Language Model, zur Erstellung des Automatisierungsprogramms verwendet, wobei das Engineeringsystem mit der Software-Bibliothek zugeordneten Notationskonventionen für die Aufrufeigenschaften und Verschaltung von Programmbausteinen versehen oder vortrainiert wird und wobei eine textuelle Beschreibung einer Projektkonfiguration mit einer Spezifikation zumindest eines Programmbausteins unter Verwendung der Informationen über die Aufrufeigenschaften und Verschaltung des jeweiligen Programmbausteins durch das Engineeringsystem verarbeitet wird.

3. Verfahren nach Patentanspruch 2,
**dadurch gekennzeichnet,**
**dass** durch das Engineeringsystem die Notationskonventionen von der Software-Bibliothek oder aus einem externen Datenserver eingelesen werden.

4. Verfahren nach einem der vorhergehenden Patentansprüche,
**dadurch gekennzeichnet,**
**dass** bei der Verschaltung der Schnittstellen des Programmbausteins anhand der Informationen passende Variablen, Tags oder Datenstrukturen anderer Programmbausteine oder eines Prozessabbildes oder einer globalen Datenstruktur oder ein Kommunikationskanal aufgefunden und verknüpft werden.

5. Verfahren nach einem der vorhergehenden Patentansprüche,
**dadurch gekennzeichnet,**
**dass** die maschinenlesbaren Informationen in einer Datei, insbesondere einer XML- oder JSON-Datei, gespeichert sind, wobei die Datei in der Software-Bibliothek mit dem entsprechenden Programmbaustein jeweils verlinkt oder gebündelt ist.

6. Anordnung zur Projektierung einer industriellen Automatisierungsanordnung,
mit einer Software-Bibliothek mit einer Anzahl von Programmbausteinen,
mit einem industriellen Engineeringsystem, das dazu eingerichtet ist, unter Verwendung der Programmbausteine ein Automatisierungsprogramm zu erstellen, kompilieren und zum Ablauf auf eine Automatisierungskomponente der Automatisierungsanordnung zu übertragen, und
wobei vorgesehen ist, dass für ein Automatisierungsprojekt aus der Software-Bibliothek eine Anzahl von Programmbausteinen ausgewählt und dem Automatisierungsprojekt hinzugefügt und in diesem instantiiert werden,
**dadurch gekennzeichnet,**
**dass** weiter vorgesehen ist,
**dass** zu jedem der Programmbausteine der Software-Bibliothek maschinenlesbare Informationen über die Aufrufeigenschaften und Verschaltung des jeweiligen Programmbausteins hinzugefügt sind, und
**dass** das Engineeringsystem dazu eingerichtet ist, bei der Erstellung des Automatisierungsprogramms diese Informationen der ausgewählten Programmbausteine zur Benennung der Instanzen der Programmbausteine und zur Verschaltung der Schnittstellen der instantiierten Programmbausteine zu verwenden.

7. Anordnung nach Patentanspruch 6,
**dadurch gekennzeichnet,**
**dass** das Engineeringsystem dazu eingerichtet ist, eine künstliche Intelligenz, insbesondere ein Large Language Model, zur Erstellung des Automatisierungsprogramms zu verwenden, wobei das Engineeringsystem mit der Software-Bibliothek zugeordneten Notationskonventionen für die Aufrufeigenschaften und Verschaltung von Programmbausteinen versehen oder vortrainiert ist und wobei vorgesehen ist, eine textuelle Beschreibung einer Projektkonfiguration mit einer Spezifikation zumindest eines Programmbausteins unter Verwendung der Informationen über die Aufrufeigenschaften und Verschaltung des jeweiligen Programmbausteins durch das Engineeringsystem zu verarbeiten.

8. Anordnung nach Patentanspruch 6 oder 7,
**dadurch gekennzeichnet,**
**dass** das Engineeringsystem dazu eingerichtet ist, Notationskonventionen von der Software-Bibliothek oder aus einem externen Datenserver einzulesen.

9. Anordnung nach einem der Patentansprüche 6 bis 9,
**dadurch gekennzeichnet,**
**dass** das Engineeringsystem dazu eingerichtet ist, bei der Verschaltung der Schnittstellen des Programmbausteins anhand der Informationen passende Variablen, Tags oder Datenstrukturen anderer Programmbausteine oder eines Prozessabbildes oder einer globalen Datenstruktur oder einen Kommunikationskanal aufzufinden und zu verknüpfen.

10. Anordnung nach einem der Patentansprüche 6 bis 10,
**dadurch gekennzeichnet,**
**dass** die maschinenlesbaren Informationen in einer Datei, insbesondere einer Datei, insbesondere einer XML- oder JSON-Datei, gespeichert sind, wobei die Datei in der Software-Bibliothek mit dem entsprechenden Programmbaustein jeweils verlinkt oder gebündelt ist.
